# EUROPÄISCHE PATENTSCHRIFT

(11) **EP 0 479 122 B1**
(45) Veröffentlichungstag und Bekanntmachung des Hinweises auf die Patenterteilung: **21.12.1994**
(21) Anmeldenummer: 91116411.9
(22) Anmeldetag: 26.09.1991
(51) Int. Cl.: B60J 3/02

(54) **Blendschutzvorrichtung**
Anti-glare arrangement
Dispositif anti-éblouissement

(30) Priorität: 01.10.1990 DE 4030996
(43) Veröffentlichungstag der Anmeldung: 08.04.1992
(73) Patentinhaber: Gebr. Happich GmbH, D-42097 Wuppertal (DE)
(72) Erfinder: Viertel, Lothar, W-6636 Altforweiler (DE); Welter, Patrick, F-57730 La Chambre (FR)

(56) Entgegenhaltungen:
- US-A- 2 855 241

## Beschreibung

Die Erfindung bezieht sich auf eine Blendschutzvorrichtung, insbesondere für Fahrzeuge, mit einer Baueinheit, bestehend aus zwei parallel zueinander verlaufenden Profilleisten und aus einer Anzahl zwischen den Profilleisten angeordneten, einander überlappenden Lamellenstreifen, deren Längsenden jeweils mit einer der Profilleisten gelenkig verbunden sind und deren jeweilige Anlenkpunkte einander diagonal gegenüberliegen.

Eine Blendschutzvorrichtung der gattungsgemäßen Art ist durch die DE-B-11 40 475 und durch die DE-A-39 04 367 bekanntgeworden. Bei den bekannten Blendschutzvorrichtungen wird es als störend und unschön empfunden, daß dieselben auch in ihrer Nichtgebrauchslage vom Dachbereich des Fahrzeugs, in dem sie eingebaut sind, abstehen und ins Fahrzeuginnere ragen.

Mit der Erfindung wird angestrebt, eine Blendschutzvorrichtung der eingangs näher erwähnten Art zur Verfügung zu stellen, die bei einfacher und kostengünstiger Herstellbarkeit den ästhetischen Ansprüchen der Käuferschaft besser gerecht wird.

Zur Lösung dieser Aufgabe ist erfindungsgemäß vorgesehen, daß zur Blendschutzvorrichtung weiterhin ein Gehäusekasten gehört, der in eine Aussparung der Himmelverkleidung eines Fahrzeugs einsetzbar, an der Fahrzeugkarosserie befestigbar, nach unten offen ausgebildet und zur Aufnahme der Baueinheit vorgesehen ist, wobei die Baueinheit im Gehäusekasten um eine horizontal verlaufende Achse klappbar gelagert ist und wobei der Gehäusekasten so bemessen ist, daß darin die Baueinheit in der zusammengeschobenen Nichtgebrauchslage aufgenommen und aus diesem heraus in die Gebrauchslage geklappt werden kann.

Durch diese erfindungsgemäßen Maßnahmen ergibt sich für die Baueinheit in der Nichtgebrauchslage eine flachliegende Anordnung im Gehäusekasten und, da der Gehäusekasten in einer Aussparung der Himmelverkleidung sitzt, eine versenkte Anordnung der gesamten Blendschutzvorrichtung in der Himmelverkleidung mit einem bündigen Abschluß. Die Baueinheit kann in Gebrauch genommen werden, indem sie aus dem Gehäusekasten herausgeklappt und ausgezogen wird, wobei der größte Blendschutz gegeben ist, wenn die Lamellenstreifen senkrecht zu den Profilleisten stehen.

Gemäß einer Ausgestaltung der Erfindung kann vorgesehen sein, daß die Achse durch Gelenkzapfen definiert ist, die auch zur Verbindung der Baueinheit mit dem Gehäusekasten dienen und an den Enden einer der Profilleisten angeschlossen sind. Dabei kann bevorzugterweise weiterhin vorgesehen sein, daß die achsenseitige Profilleiste einendig einen angeformten, in eine Lagerbohrung des Gehäusekastens eingreifenden Achszapfen und anderendig eine Lagerbohrung aufweist, in die ein, eine Bohrung des Gehäusekastens durchsetzender Gelenkzapfen eingesetzt ist. Damit kann der Zuammenbau von Gehäusekasten und Baueinheit durch eine einfache, schnell und mühelos durchzuführende Steckmontage erfolgen.

In weiterer Ausgestaltung der Erfindung ist der Gehäusekasten mit zumindest einem, die Baueinheit sowohl in der Ruhelage als auch in der Gebrauchslage haltenden Federmittel ausgerüstet. Dabei hat es sich als besonders zweckmäßig erwiesen, daß außenseitig am Gehäusekasten zumindest eine Blattfeder befestigt ist, die mit einem nockenartig ausgebildeten Federbereich eine Öffnung im Gehäusekasten durchsetzt und an die achsseitige Profilleiste angreift, um die Baueinheit in der Ruhelage oder Gebrauchslage zu halten.

Der Gehäusekasten ist bevorzugterweise als Kunststoff-Spritzgußteil ausgebildet und ist damit einfach und kostengünstig herstellbar und er weist bevorzugterweise angeformte Befestigungshaken und Anschraubdome auf und ist dadurch schnell und einfach zu montieren.

Ein Ausführungsbeispiel der Erfindung wird nachfolgend anhand der Zeichnung näher erläutert. Es zeigen:
- Fig. 1: den vorderen Innenraumbereich eines Fahrzeugs mit Blick auf die Windschutzscheibe und mit Blick auf die oberhalb der Windschutzscheibe am Dachbereich angeordneten Blendschutzvorrichtungen,
- Fig. 2: den Schnitt durch eine der Blendschutzvorrichtungen, etwa folgend der Linie II - II in Fig. 1,

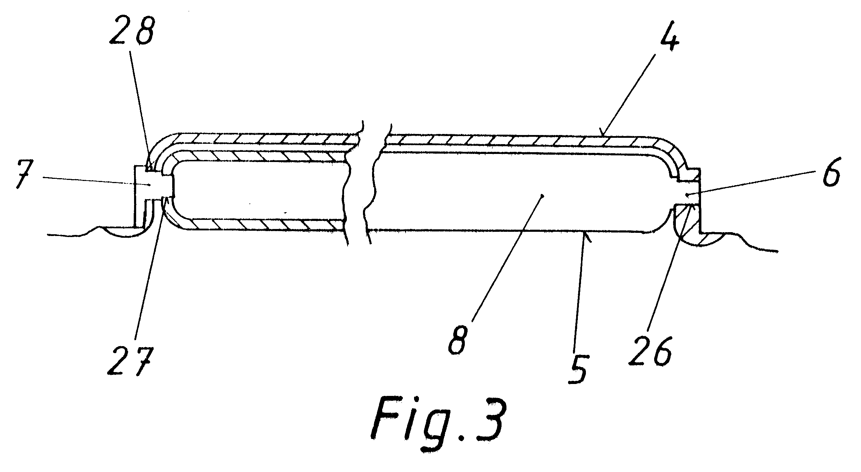

- Fig. 3: das Lagerprinzip der Blendschutzvorrichtung bzw. die Anordnung der Baueinheit im Gehäusekasten,
- Fig. 4: eine Teilansicht der Blendschutzvorrichtung, teilweise im Schnitt,
- Fig. 5: einen einzelnen Lamellenstreifen in Draufsicht,
- Fig. 6: eine Seitenansicht nach Fig. 5,
- Fig. 7: ein Distanzelement der Blendschutzvorrichtung in Draufsicht,
- Fig. 8: ein gegenüber Fig. 7 abgewandeltes Distanzelement mit einem linksseitig davon dargestellten Lagerzapfen eines Lamellenstreifens und
- Fig. 9: einen senkrechten Schnitt durch die Baueinheit.

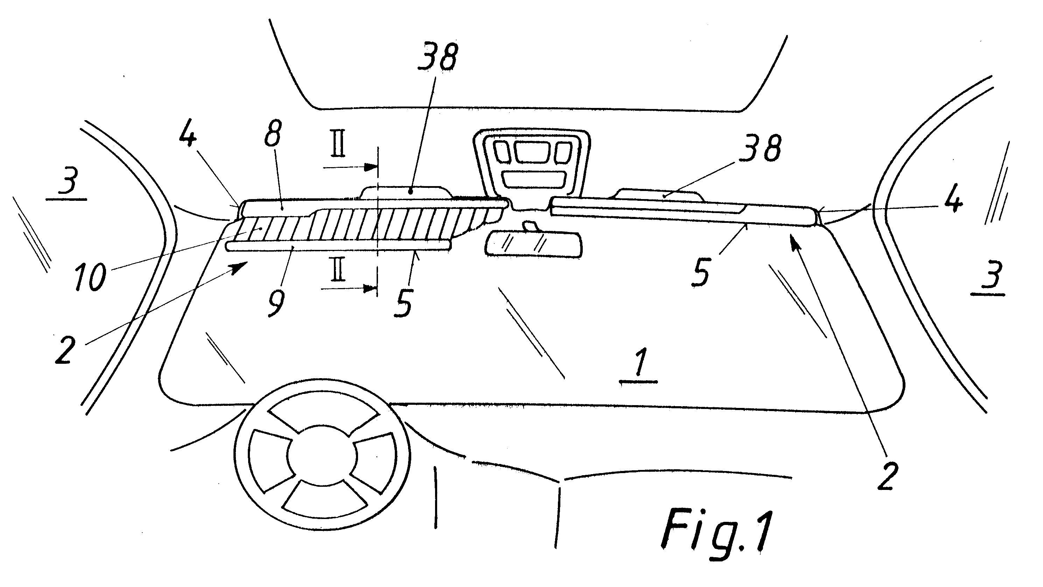

Fig. 1 zeigt den vorderseitigen Innenraumbereich eines Fahrzeugs und läßt die Windschutzscheibe 1 und die oberhalb derselben am Dachbereich des Fahrzeugs angeordneten neuen Blendschutzvorrichtungen 2 erkennen. Oberhalb vor dem Fahrersitz und oberhalb vor dem Beifahrersitz ist also jeweils eine Blendschutzvorrichtung 2 angeordnet. Entsprechende Anordnungen können natürlich auch oberhalb der Seitenfenster 3 vorgesehen werden. Von den in Fig. 1 gezeigten Blendschutzvorrichtungen nimmt die zeichnungslinksseitige die Gebrauchsstellung und die zeichnungsrechtsseitige die Nichtgebrauchsstellung ein.

Die neue Blendschutzvorrichtung besteht aus einem Gehäusekasten 4 und aus einer Baueinheit 5, die im Gehäusekasten 4 klappbar gelagert ist.

Die Baueinheit besteht im wesentlichen aus einer oberen Profilleiste 8, die-über Gelenkzapfen 6 und 7 mit dem Gehäusekasten klappbeweglich verbunden ist, einer unteren Profilleiste 9, die auch als Betätigungshandhabe dient, und aus zwischen den Profilschienen 8,9 schwenkbeweglich gelagerten Lamellenstreifen 10.

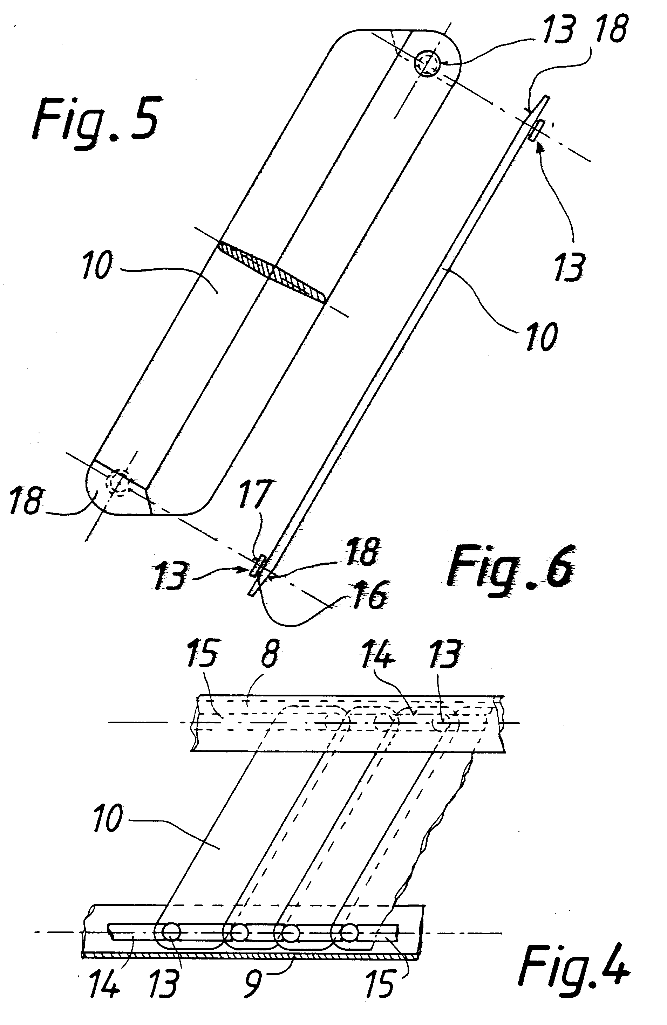

Fig. 4 zeigt eine Teilansicht der Baueinheit 5, wobei die obere Profilleiste 8, die untere Profilleiste 9, eine Anzahl von Lamellenstreifen 10 mit Lagerzapfen 13 und die Lagerzapfen 13 der Lamellenstreifen 10 auf Abstand haltende Distanzelemente 14 zu erkennen sind. Jede Profilleiste 8 und 9 besitzt eine durchlaufende, hinterschnittene, z.B. schwalbenschwanzförmig ausgebildete Nut 15, welche zur Aufnahme der Lagerzapfen 13 und der Distanzelemente vorgesehen ist.

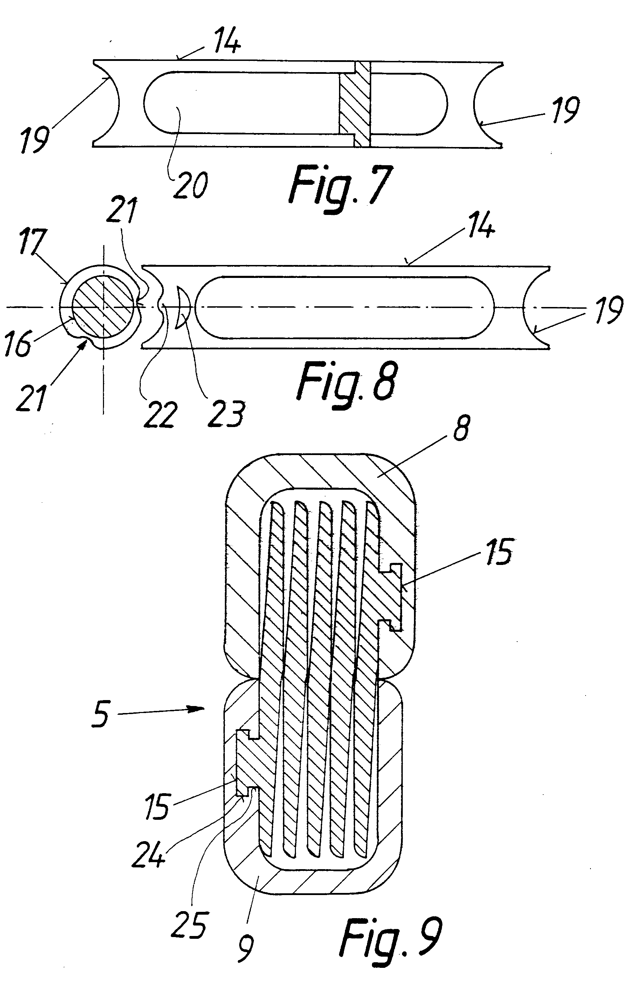

In den Fig. 5 und 6 ist ein Lamellenstreifen 10 in zwei Ansichten dargestellt. Der Lamellenstreifen 10 ist parallelogrammförmig gestaltet und seine Längskanten verlaufen in der Nichtgebrauchslage der Blendschutzvorrichtung 2 parallel zu den Profilschienen 8 und 9 (vgl. Fig. 9), während die Stirnkanten parallel zur Längsachse der Profilleisten 8,9 verlaufen, wenn die Blendschutzvorrichtung ihre Gebrauchslage einnimmt. Der Lamellenstreifen ist als Kunststoff-Spritzgußkörper ausgebildet und weist die Lagerzapfen 13 an den Längsenden einstückig angeformt auf. Dabei ist jeweils ein Lagerzapfen auf der Vorderseite und ein zweiter Lagerzapfen auf der Lamellenstreifen-Rückseite angeformt. Jeder Lagerzapfen 13 weist jeweils ein zylindrisches Halsstück 16 und ein zylindrisches Kopfstück 17 (Kragen) auf. Jeder Lagerzapfen 13 ist dem Öffnungsquerschnitt der Nuten 15 in den Profilleisten angepaßt.

Wie in Fig. 5 und 6 weiterhin gezeigt, nimmt die Dicke der Lamellenstreifen von deren Längsmitte zu den Längskanten hin ab. Weiterhin ist zu sehen, daß die freien Endbereiche der Lamellenstreifen 10 auf den den Lagerzapfen 13 jeweils abgewandten Breitseiten jeweils eine Abflachung 18 aufweisen.

Fig. 7 zeigt ein Distanzelement 14, das eine rechteckige Grundform, konkav gestaltete Ausnehmungen 19 an den Stirnenden und bereichsweise - wie dargestellt - einen dem Öffnungsquerschnitt der Profilleistennuten 15 entsprechenden Querschnitt aufweist. Der Radius der Ausnehmungen 19 entspricht dem des Kopfstücks 17 der Lagerzapfen 13. Der flache Teil des Distanzelements 14 paßt also in die Erweiterung und der dicke Teil (Ansatz 20) in die Verengung jeder hinterschnittenen Nut 15. Die Länge der Distanzelemente 14 ist so bemessen, daß die einzelnen Lamellenstreifen 10 sich, wie in Fig. 4 gezeigt, in der Gebrauchslage noch randseitig überlappen.

Die Baueinheit 5 ist mit einer sie zumindest in der Nichtgebrauchslage haltenden Rasteinrichtung versehen. Hierzu weist ein Kopfstück 17 eines Lagerzapfens 13 zumindest eine umfangsseitige Einkerbung 21 auf, in die ein Vorsprung 22, der den konkaven Verlauf der Ausnehmung 19 unterbricht, einzuschnäppern vermag. Eine Federelastizität wird durch eine dem Vorsprung 22 benachbarte Ausnehmung 23, die einen flachen Teil des Distanzelements 14 durchsetzt, bewirkt.

Fig. 9 zeigt einen vertikalen Schnitt durch die Baueinheit 5 in der zusammengeschobenen Lage. Dabei ist zunächst zu sehen, daß die Profilleisten 8, 9 jeweils als Schienen mit U-förmigem Querschnitt ausgebildet sind, wobei sich jeweils in einem Schenkel der Profilleisten (auf einander gegenüberliegenden Seiten) eine Nut 15 befindet. Jede Nut 15 weist einen engeren, der Profilöffnung zugewandten Nutteil 25 und einen sich daran anschließenden, erweiterten Nutteil 24 auf. Der Nutteil 25 entspricht in Höhe und Weite dem Halsstück 16 der Lagerzapfen 13 und dem Ansatz 20 der Distanzelemente 14, während der Nutteil 24 dem Kopfstück 17 und dem flacheren bzw. dünneren Querschnittsbereich der Distanzstücke 14 entspricht. Die Lagerzapfen 13 und die Distanzelemente 14 können somit in die Nuten 15 der Profilleisten 8, 9 eingeschoben werden. Bei der Montage erfolgt abwechselnd ein Einstecken eines Lagerzapfens 13 und eines Distanzelements 14, wobei jedes erste und letzte Montageteil in jeder Nut 15 gegen ein axiales Verschieben, z.B. durch einen Stopfen, eine Endkappe od.dgl. Mittel zu sichern ist.

Zweckmäßigerweise bestehen sämtliche Teile der neuen Blendschutzvorrichtung aus Kunststoff, wobei die Herstellung bevorzugterweise im Spritzgußverfahren erfolgt.

Wie schon erwähnt, ist die Baueinheit 5 über Gelenkzapfen 6 und 7 am Gehäusekasten 4 klappbeweglich angeordnet. Dabei ist der Gelenkzapfen 6, der eine Lagerbohrung 26 in einer Seitenwand des Gehäusekastens 4 durchsetzt, unmittelbar an der oberen, achsenseitigen Profilleiste 8 angeformt. Anderendig weist die Profilleiste 8 eine Lagerbohrung 27 auf, in die der Gelenkzapfen 7, der hier als separates Bauteil ausgebildet ist, eingreift. Dabei durchsetzt der Gelenkzapfen 7 mit einem Zapfenabschnitt eine Bohrung 28 des Gehäusekastens 4. Die Anordnung der Baueinheit im Gehäusekasten 4 kann daher schnell und einfach per Steckmontage erfolgen.

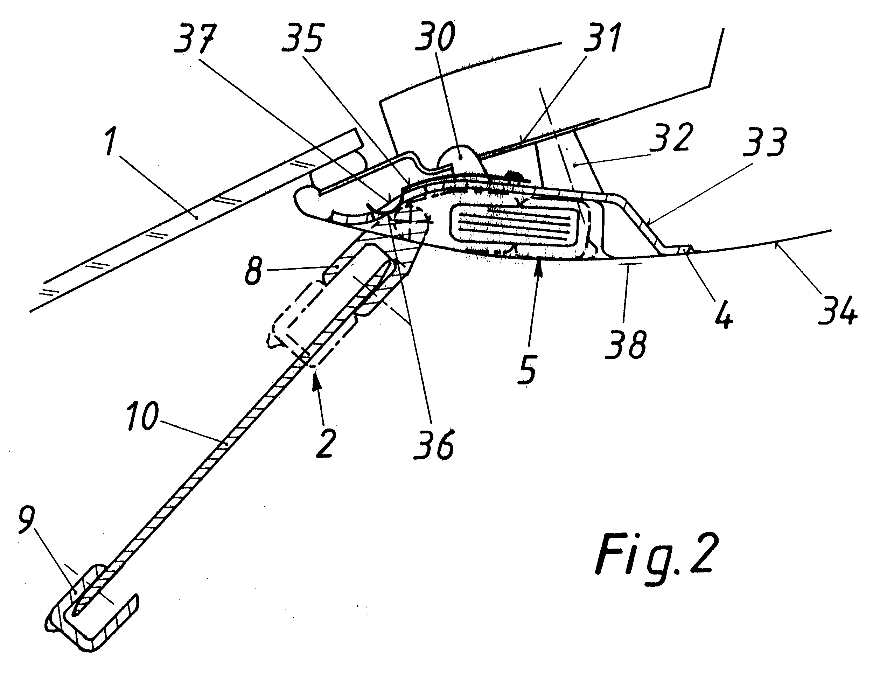

Der Gehäusekasten 4 weist Einhängehaken 30, die eine Öffnung in einer Karosseriewandung 31 durchsetzen und Anschraubdome 32, die sich gegen die Karosseriewandung 31 abstützen, einstückig angeformt, auf. Der Gehäusekasten 4 sitzt (vgl. insbesondere Fig. 2) in einer Aussparung 33 der Himmelverkleidung 34, und er ist an der Karosseriewandung 31 gehalten, und zwar einmal durch die eingehängten Einhängehaken 30 und einmal durch Befestigungselemente, die die Befestigungsdome durchsetzen. Um die Baueinheit 4 einmal in der Nichtgebrauchslage flach in Gehäusekasten 4 liegend zu halten (vgl. strichpunktierte Linien in Fig. 2) und zum anderen auch in der herausgeklappten Gebrauchslage zu halten (vgl. ausgezogene Linien in Fig. 2), ist zumindest eine Blattfeder 35, die am Gehäusekasten 4 angenietet ist, vorgesehen. Die Blattfeder 35 durchsetzt mit einem nockenartigen Federabschnitt 36 eine Öffnung 37 des Gehäusekastens 4 und stützt sich an der achsenseitigen Profilleiste 8 ab. Die Abstützung erfolgt einmal von der linken Profilleistenseite und nach Überführung über die Totpunktlage von der rechten Profilleistenseite. Eine Griffmulde 38 im Gehäusekasten 4 erleichtert das Herausklappen der Baueinheit 5.

## Patentansprüche

1. Blendschutzvorrichtung, insbesondere für Fahrzeuge, mit einer Baueinheit (5), bestehend aus zwei parallel zueinander verlaufenden Profilleisten (8, 9) und aus einer Anzahl zwischen den Profilleisten (8, 9) angeordneten, einander überlappenden Lamellenstreifen (10), deren Langsenden jeweils mit einer der Profilleisten (8, 9) gelenkig verbunden sind und deren jeweilige Anlenkpunkte einander diagonal gegenüberliegen, dadurch gekennzeichnet, daß zur Blendschutzvorrichtung weiterhin ein Gehäusekasten (4) gehört, der in eine Aussparung (33) der Himmelverkleidung (34) eines Fahrzeugs einsetzbar, an der Fahrzeugkarosserie (31) befestigbar, nach unten offen ausgebildet und zur Aufnahme der Baueinheit (5) vorgesehen ist, wobei die Baueinheit (5) im Gehäusekasten (4) um eine horizontal verlaufende Achse klappbar gelagert ist und wobei der Gehäusekasten (4) so bemessen ist, daß darin die Baueinheit (5) in der zusammengeschobenen Nichtgebrauchslage aufgenommen und aus diesem heraus in die Gebrauchslage geklappt werden kann.

2. Blendschutzvorrichtung nach Anspruch 1, dadurch gekennzeichnet daß die Achse durch Gelenkzapfen (6,7) definiert ist, die auch zur Verbindung der Baueinheit (5) mit dem Gehäusekasten (4) dienen und an den Enden einer der Profilleisten (8) angeordnet sind.

3. Blendschutzvorrichtung nach Anspruch 1 oder 2, dadurch gekennzeichnet, daß die achsenseitige Profilleiste (8) einendig einen angeformten, in eine Gelenkbohrung (26) des Gehäusekastens (4) eingreifenden Achszapfen (6) und anderendig eine Gelenkbohrung (27) aufweist, in die ein, eine Bohrung des Gehäusekastens (4) durchsetzender Gelenkzapfen (7) eingesetzt ist.

4. Blendschutzvorrichtung nach wenigstens einem der Ansprüche 1 bis 3, dadurch gekennzeichnet, daß der Gehäusekasten (4) mit zumindest einem, die Baueinheit (5) sowohl in der Ruhelage als auch in der Gebrauchslage haltenden Federmittel ausgerüstet ist.

5. Blendschutzvorrichtung nach wenigstens einem der Ansprüche 1 bis 4, dadurch gekennzeichnet, daß außenseitig am Gehäusekasten (4) zumindest eine Blattfeder (35) befestigt ist, die mit einem nockenartig ausgebildeten Federbereich (36) eine Öffnung (37) im Gehäusekasten (4) durchsetzt und an die achsseitige Profilleiste (8) angreift, um die Baueinheit (5) in der Ruhelage oder Gebrauchslage zu halten.

6. Blendschutzvorrichtung nach wenigstens einem der Ansprüche 1 bis 5, dadurch gekennzeichnet, daß der Gehäusekasten (4) ein Kunststoff-Spritzgußteil ist und angeformte Befestigungshaken (30) und Anschraubdome (32) aufweist.

## Claims

1. Anti-glare device, in particular for vehicles, having a structural unit (5) comprising two mutually parallel-running profiled mouldings (8, 9) and a number of mutually overlapping lamellar strips (10), which are disposed between the profiled mouldings (8, 9) and the longitudinal ends of which are respectively connected, in an articulated manner, to one of the profiled mouldings (8, 9) and the respective attachment points of which lie diagonally opposite each other, characterized in that also forming part of the anti-glare device is a housing case (4), which can be inserted in a recess (33) in the roof lining (34) of a vehicle, can be fastened to the vehicle body (31), is configured open in the downward direction and is designed to receive the structural unit (5), the structural unit (5) being mounted in the housing case (4) such that it can be tilted about a horizontally running axis and the housing case (4) being dimensioned such that the structural unit (5) can be therein received in the folded-up, non-usage position and can be tilted out of the said housing case into the usage position.

2. Anti-glare device according to Claim 1, characterized in that the axis is defined by link pins (6, 7), which also serve to connect the structural unit (5) to the housing case (4) and are disposed at the ends of one of the profiled mouldings (8).

3. Anti-glare device according to Claim 1 or 2, characterized in that the profiled moulding (8) located on the axis side exhibits, at one end, a formed-on swivel pin (6) engaging in a link bore (26) in the housing case (4) and, at the other end, a link bore (27) into which there is inserted a link pin (7) passing through a bore in the housing case (4).

4. Anti-glare device according to at least one of Claims 1 to 3, characterized in that the housing case (4) is equipped with at least one spring means which holds the structural unit (5) both in the rest position and in the usage position.

5. Anti-glare device according to at least one of Claims 1 to 4, characterized in that to the housing case (4), on the outer side, there is fastened at least one leaf spring (35), which passes with a cam-like configured spring region (36) through an opening (37) in the housing case (4) and acts upon the profiled moulding (8) located on the axis side so as to hold the structural unit (5) in the rest position or usage position.

6. Anti-glare device according to at least one of Claims 1 to 5, characterized in that the housing case (4) is a synthetic injection-moulded part and exhibits formed-on fastening hooks (30) and screw-on domes (32).

## Revendications

1. Dispositif pare-soleil, notamment pour véhicules, comprenant un ensemble (5) formé par deux bandes profilées parallèles (8, 9) et un certain nombre de lamelles (10) en chevauchement et disposées entre les bandes profilées (8, 9), dont les extrémités longitudinales sont respectivement reliées de façon articulée à chacune des bandes profilées (8, 9) et dont les points d'articulation respectifs sont disposés à l'opposé les uns des autres et en diagonale, caractérisé en ce que qu'au dispositif pare-soleil est en outre associé un boîtier formant logement (4) qui est de constitution ouverte vers le bas, peut être inséré dans un évidement (33) de l'habillage de plafond (34) d'un véhicule et être fixé à la carrosserie (31) du véhicule, et qui est prévu pour recevoir l'ensemble (5), cet ensemble (5) étant monté de façon rabattable dans le boîtier (4) autour d'un axe disposé horizontalement et le boîtier (4) étant dimensionné de manière que l'ensemble (5) puisse y être reçu dans sa position repliée sur lui-même de non utilisation, et être rabattu et sorti de celui-ci vers sa position d'utilisation.

2. Dispositif pare-soleil selon la revendication 1, caractérisé en ce que l'axe est défini par des tourillons d'articulation (6, 7) qui servent également à la liaison de l'ensemble (5) avec le boîtier formant logement (4) et qui sont disposés aux extrémités de l'une (8) des bandes profilées.

3. Dispositif pare-soleil selon la revendication 1 ou 2, caractérisé en ce que la bande profilée (8) située du côté de l'axe comprend à une extrémité un tourillon d'axe (6) pénétrant dans un alésage de support (26) du boîtier formant logement (4) et à l'autre extrémité un alésage de support (27) dans lequel est introduit un tourillon d'articulation (7) traversant un alésage du boîtier formant logement (4).

4. Dispositif pare-soleil selon l'une au moins des revendications 1 à 3, caractérisé en ce que le boîtier formant logement (4) est équipé d'au moins un moyen à ressort qui maintient l'ensemble (5) aussi bien dans la position de repos que dans la position d'utilisation.

5. Dispositif pare-soleil selon l'une au moins des revendications 1 à 4, caractérisé en ce qu'au moins un ressort à lame (35) fixé à l'extérieur du boîtier formant logement (4), qui traverse par une partie (36) en forme de saillie une ouverture (37) constituée dans le boîtier formant logement (4) et qui coopère avec la bande profilée (8) située du côté de l'axe, de manière à maintenir l'ensemble (5) dans la position de repos ou dans la position d'utilisation.

6. Dispositif pare-soleil selon l'une au moins des revendications 1 à 5, caractérisé en ce que le boîtier formant logement (4) est constitué par un élément en matière plastique moulée par injection et comprend des crochets de fixation (30) et des dômes pour vissage (32).
